**Europäisches Patentamt**

**European Patent Office**

**Office européen des brevets**

(19)

(11) Veröffentlichungsnummer: **0 244 345**
**A2**

(12) # EUROPÄISCHE PATENTANMELDUNG

(21) Anmeldenummer: **87710003.2**

(22) Anmeldetag: **22.04.87**

(51) Int. Cl.³: **F 16 B 12/44**
**A 47 B 13/06**

(30) Priorität: **24.04.86 DE 3613812**
**09.12.86 DE 3641967**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **Rensch, Eberhard G.**
**Chemin Bottai**
**CH-1822 Chernex sur Montreux(CH)**

(72) Erfinder: **Rensch, Eberhard G.**
**Chemin Bottai**
**CH-1822 Chernex sur Montreux(CH)**

(74) Vertreter: **Funck-Hartherz, Anna-Eleonore, Dipl.-Phys.**
**Hoherodskopfstrasse 41**
**D-6000 Frankfurt (Main) 50(DE)**

(54) Rahmeneckverbindung für Tische und dergl.

(57) Die Erfindung bezieht sich auf eine Rahmeneckverbindung für Tische und dergl., deren Platten von Rahmen getragen werden.

Der Erfindung liegt die Aufgabe zugrunde, eine Eckverbindung für einen Tischrahmen und Tisch vorzuschlagen, die einen einfachen und schnellen Zusammenbau mit wenigen Einzelteilen ermöglicht und eine spielfreie, feste und belastbare Verbindung der Einzelteile gewährleistet, so daß ein standsicherer, in sich fester Tisch erhalten wird.

Gemäß der Erfindung werden die auf Gehrung geschnittenen Rahmenprofilteile des Tisches mit an der Ecke ansetzenden Winkelstücken verbunden, wobei zwischen den Rahmenprofilteilen und dem an seiner Spitze abgeflachten, als Eckverbinder dienenden Winkelstück in der Ecke ein Dreieckkeil eingefügt ist. Demzufolge wird eine starre, unverschiebbare Verbindung der einzelnen Profilteile bei einfacher und schneller Montage sowie Verbindung durch nur zwei Schrauben möglich, da durch den Dreieckkeil die Einzelteile fest miteinander verklemmt werden.

Fig. 5

EP 0 244 345 A2

**0244345**

DIPL.-PHYS.

**A. FUNCK-HARTHERZ**

PATENTANWÄLTIN

6 FRANKFURT/M. 50, AM    22.4.1987
HOHERODSKOPFSTR. 41

P 87/1639 eu
f/di

Eberhard G. Rensch

Chemin Bottai

CH 1822 Chernex sur Montreux

---

## Rahmeneckverbindung für Tische und dergl.

---

Die Erfindung bezieht sich auf eine Eckverbindung für Rahmen, die für Platten von Tischen, Anrichten oder dergl. gebraucht werden. Die Platte besteht dabei aus einem Rahmen, vorzugsweise aus Metall, der einen Einsatz bzw. eine Einlege- oder Auflageplatte trägt, der bzw. die in den Rahmen eingefügt sein kann.

Platten mit einem Rahmen und daraus gefertigte Einrichtungsgegenstände zeigen häufig eine sehr zeitaufwendige und umständliche Montage, und zwar durch eine Menge von Einzelteilen und eine große Anzahl von Verbindungsstellen (Verschraubungen, Vernietungen), um eine spielfreie und auf

0244345

- 2 -

Dauer feste Verbindung zu garantieren. Außerdem werden die Rahmen und die daraus hergestellten Einrichtungsgegenstände den ergonomischen Forderungen nicht gerecht.

Die Erfindung hat sich nun die Aufgabe gestellt, eine Eckverbindung für einen Tischrahmen zu schaffen, die einen einfachen und schnellen Zusammenbau mit nur wenigen Einzelteilen ermöglicht und eine spielfreie, feste und belastbare Verbindung der Einzelteile des Rahmens und damit des Tisches gewährleistet. Der Rahmen gemäß der Erfindung berücksichtigt außerdem die ergonomischen Forderungen und die Probleme des Anbaues bzw. der Anordnung von Zubehörteilen entsprechend der jetzigen und zukünftigen Büro- und Haushaltstechnik.

Gemäß der Erfindung wird eine Eckverbindung für Rahmen für Tische und dergl. vorgeschlagen, die von einer Rahmeneckverbindung für Tischrahmen aus mehreren, auf Gehrung geschnittenen Rahmenprofilteilen, die über Eckverbinder miteinander verbunden sind, ausgeht. Gemäß der Erfindung ist der Eckverbinder als Winkelstück ausgebildet, dessen Spitze abgeflacht ist und wobei zwischen diesem Eckverbinder und den die Ecke bildenden Rahmenprofilteilen ein Dreieckkeil zwischengefügt ist und die beiden Schenkel des Eckverbinders mit den Rahmenprofilteilen verschraubt sind. Der Dreieckkeil ermöglicht eine spielfreie einfache Verbindung, wie später noch näher erläutert wird. Gemäß der Erfindung kann das die Rahmen verbindende Winkelstück zu einem Tischbein verlängert sein. Zur Erleichterung der Montage und zur Erlangung eines festeren Sitzes sind an benachbarten Ecken des Dreieckkeils zwei Fortsätze vorgesehen, die in dazupassende Nuten der Rahmenprofilteile zur Justierung des Keils eingeschoben werden.

Als besonders vorteilhaft haben sich Rahmenprofilteile für
einen Tisch gezeigt, die aus einem nach unten offenen L-
oder U-förmigen Profil bestehen, deren äußerer Schenkel
vorteilhafterweise stärker als der an der Innenseite verlaufende bemessen ist. Das die Verbindung der Rahmenteile
vornehmende Winkelstück greift dabei in die nach unten
offenen Kammern der Rahmenprofilteile ein. Es hat sich
dabei herausgestellt, daß die erfindungsgemäße Eckverbindung eine feste, spielfreie und belastbare Verbindung ergibt, wenn an jeder Ecke je eine Schraube durch die beiden
das Winkelstück bildenden Schenkel und den Rahmenprofilteilen geführt ist.

Nach der Erfindung besteht der Eckverbinder aus einem
Winkelstück aus einem hohlen rundum geschlossenen Strangpreßteil, in dem Zwischenwände vorgesehen sind. Dieses
Winkelstück kann unterschiedlich lang bemessen sein. Die
Höhe des Winkelstückes kann sich auf die Tiefe der Aussparung des L- oder U-Profiles beschränken; es kann jedoch
auch als Stützbein verlängert sein, wobei die Länge des
Stützbeines den jeweiligen Erfordernissen anpaßbar ist.

Der Rücken des L- oder U-förmigen Rahmenprofiles dient als
Auflage für den Einsatz bzw. die Platte und kann einen aufstehenden Flansch zeigen, der die Halterung für die Platte
gegen Verschiebung darstellt. Dieser Flansch kann eine Verlängerung des äußeren Schenkels bilden, und dessen oberes
Ende kann nach innen abgebogen sein, um eine scharfkantige
Ecke zu vermeiden.

Der mittels der erfindungsgemäßen Eckverbindung gebildete
Tischrahmen besteht aus nur wenigen Einzelteilen und ist in
einfacher Weise und schnell bei Verwendung von nur zwei
Schrauben je Ecke zusammenbaubar. Im allgemeinen ist eine

- 4 -

Verbindung mit nur zwei Schrauben nicht praktikabel, da die Einzelteile nicht so genau aufeinander abgestimmt sein können, daß ein spielfreies Ineinandergreifen erfolgt. Toleranzprobleme entstehen dabei schon allein durch den auftretenden Schraubdruck, und es ergibt sich bei den bekannten Ausführungen bei Verwendung von nur zwei Schrauben stets eine Art von Gelenk, das zur Lockerung der Verbindung führt. Außerdem verläuft die Gehrung nie gerade, so daß auch daraus eine Verschiebung resultieren kann. Bei der erfindungsgemäßen Ausbildung der L- oder U-förmigen Profile, Dreieckkeile und Winkelstücke wird eine starre, unverschiebbare Verbindung bei einfacher schneller Montage und Sicherung durch nur zwei Schrauben pro Ecke erreicht, da durch den Dreieckkeil die Einzelteile so miteinander verklemmt werden, daß eine Verschiebung oder Lockerung verhindert wird.

Wie bereits ausgeführt, können die äußeren Schenkel der Profilrahmenteile im Querschnitt dicker als die inneren gehalten sein, um aus ergonomischen Gründen die scharfen Eckkanten abschrägen zu können. Bei dieser Maßnahme hat sich herausgestellt, daß die bei der Abschrägung entstehende Fläche doch an der Linie des Zusammentreffens der Rahmenteile noch scharfe Stellen aufweisen kann. Deshalb wird erfindungsgemäß noch vorgeschlagen, daß der Dreieckkeil an der fortsatzfreien, vorzugsweise rechtwinkeligen Ecke einen Schirm trägt, hinter dem die abgeschrägten auf Gehrung geschnittenen Kanten der Rahmenprofilteile zusammentreffen. Auf diese Art ist gewährleistet, daß die Eckflächen kantenfrei und ohne scharfkantige Stellen sind, so daß sich niemand, der um den Tisch herumgeht, stoßen oder anderweitig verletzen kann.

Weitere Einzelheiten sind der Beschreibung der beigefügten Zeichnung zu entnehmen. Dabei zeigen

Fig. 1a und 1b   eine Seitenansicht eines möglichen
                 Tischrahmenprofilteils gemäß Erfindung,

Fig. 2           eine Draufsicht auf das Winkelstück,

Fig. 3           eine Explosivdarstellung einer
                 Rahmenecke mit Dreieckkeil,

Fig. 4           eine Explosivdarstellung einer Tischecke,

Fig. 5           eine Explosivdarstellung in Richtung
                 auf die Tischecke,

Fig. 6a und 6b   Ansichten einer modifizierten Ausführung des Dreieckkeils,

Fig. 7           Seitenansicht eines in ein Rahmenprofilteil eingesetzten Dreieckkeils
                 nach Fig. 6a und 6b,

Fig. 8           Draufsicht, zum Teil aufgebrochen, auf
                 einen in ein Rahmenprofilteil eingesetzten Dreieckkeil nach Fig. 6a und
                 6b,

Fig. 9           Explosivdarstellung einer Rahmenecke
                 ohne Eckverbinder,

Fig.10           eine Eckansicht eines Tisches nach
                 Zusammenbau,

Fig.11           eine Draufsicht auf eine mögliche
                 Ausführung eines Stützbeines.

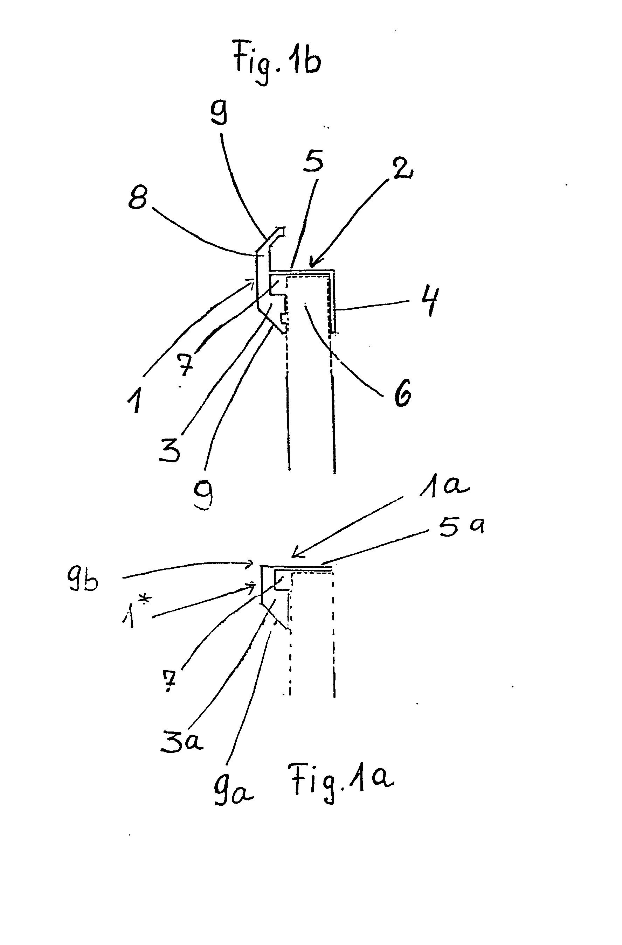

In Fig. 1a ist die Seitenansicht eines für Tische verwendeten Rahmenprofilteils 1* gezeigt, das aus einem
L-förmigen Winkelstück 1a besteht, dessen äußerer Schenkel
mit 3a und dessen senkrecht dazu verlaufender Schenkel mit
5a bezeichnet ist. In der Zeichnung trägt der äußere
Schenkel eine Innennut 7 zum Eingriff des Dreieckkeils,
wie später noch beschrieben wird. Bei 9a ist die Ecke abgeschrägt, um scharfkantige Gebiete zu vermeiden;
die Ecke 9b kann ebenfalls abgeschrägt sein. Das Rahmenprofilteil kann auch nur aus einer Leiste bestehen, die dem
Schenkel 3a mit oder ohne Nut 7 entspricht, solange nur gewährleistet ist, daß eine feste Eckverbindung zwischen den
Rahmenteilen und den Eckverbindern erfolgen kann.

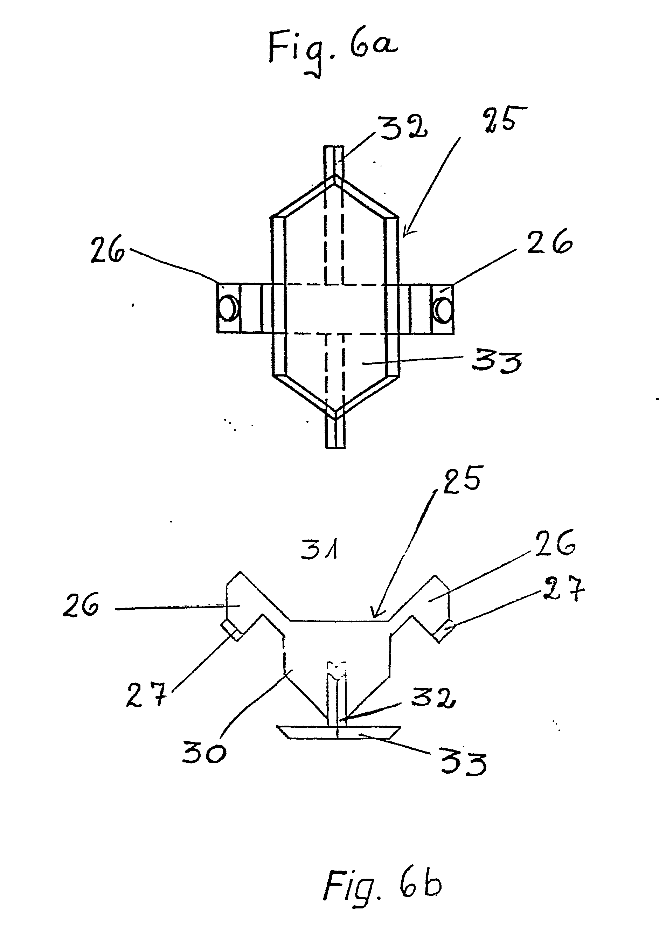

Ein anderes Rahmenprofilteil 1 für Tische ist in Fig. 1b
gezeigt. Es besteht aus dem nach unten offenen U-förmigen
Profil 2 mit dem äußeren Schenkel 3, dem inneren Schenkel 4
und dem Rücken 5. Die von dem Profil gebildete Kammer ist
mit 6 bezeichnet. An der Innenseite des äußeren Schenkels,
der im Querschnitt stärker als der Innenschenkel bemessen
ist,  befindet sich die Nut 7 zum Eingriff eines später
gezeigten Dreieckkeils 15, 25 (Fig. 3, Fig. 6a und 6b). Der
äußere Schenkel ist nach oben zu dem aufstehenden Flansch 8
verlängert und dessen freies Ende leicht nach innen abgebogen. Die Außenseite des Rahmens 1 ist zur Vermeidung rechtwinkliger Kanten und dadurch möglicherweise entstehender
Verletzungen bei 9 abgeschrägt.

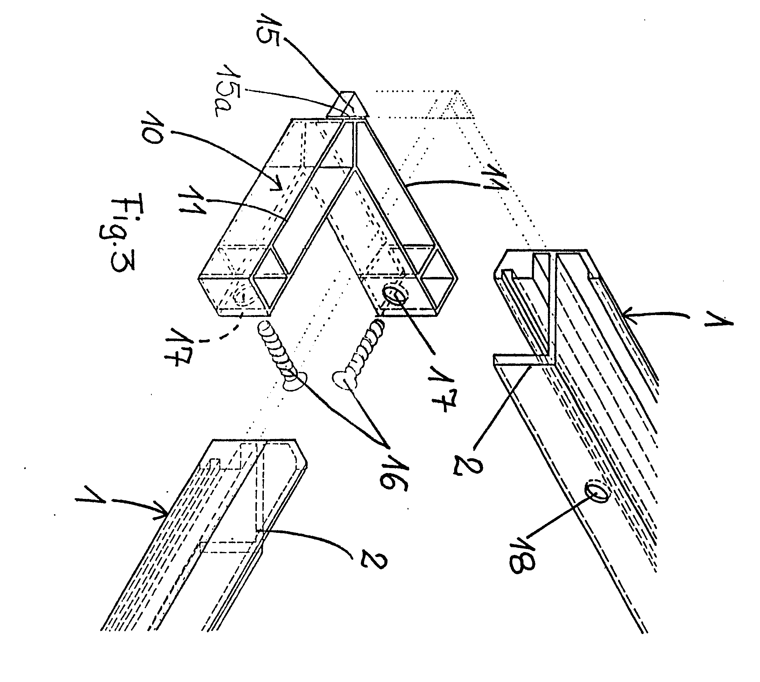

Eine Draufsicht auf das die Rahmenprofilteile verbindende
Winkelstück 10 ist in Fig. 2 gezeigt. Das Winkelstück 10
zeigt rechtwinklig zueinander verlaufende Schenkel 11, wobei die Ecke bei 12 abgeflacht ist. Das Winkelstück 10
besteht vorzugsweise aus einem rundum geschlossenen hohlen
Strangpreßteil, das oben und unten offen ist. Aus Gründen
der Stabilität sind Zwischenwände 13 vorgesehen.

Fig. 3 ist eine Explosivdarstellung einer Rahmenecke, bestehend aus zwei benachbarten, auf Gehrung geschnittenen
Rahmenteilen 1 mit den Profilen 2, einem Winkelstück 10,
dem in die Nuten 7 der Profile eingreifenden rechtwinkeligen Dreieckkeil 15, der mit der Seitenfläche 15a an der Abflachung 12 des als Eckverbinder dienden Winkelstücks bei und nach Zusammenbau anliegt. Die korrespondierenden Schraubenbohrungen für die Verbindungsschrauben 16 sind mit 17 im Winkelstück 10 und mit 18 in den Profilen 2 bezeichnet. Die Schenkel 11 des Winkelstücks 10 sind so bemessen, daß sie genau in die Kammern 6 der Profile passen, und zwar in der hier gezeigten Ausführung in Höhe und Breite. Zum Zusammenbau des Rahmens werden die Einzelteile, nämlich der Dreieckkeil 15, die beiden auf Gehrung geschnittenen Rahmenteile 1 und das in die Kammer der Profilteile 2 eingreifende Winkelstück 10 zusammengefügt und durch die beide Schrauben 16 miteinander verbunden. Der Schraubdruck sorgt dafür, daß die Einzelteile durch die Einfügung des Dreieckkeils fest miteinander verklemmt werden, so daß nach dem Zusammenschrauben eine spiel- und verschiebungsfreie Verbindung der Einzelteile des Tischrahmens gewährleistet ist. Sollte an einem Rahmenprofilteil des Tisches eine Beschädigung vorliegen, so besteht die Möglichkeit des Auswechselns dieses Profilteiles ohne Beschädigung der anderen Teile auf einfache Weise.

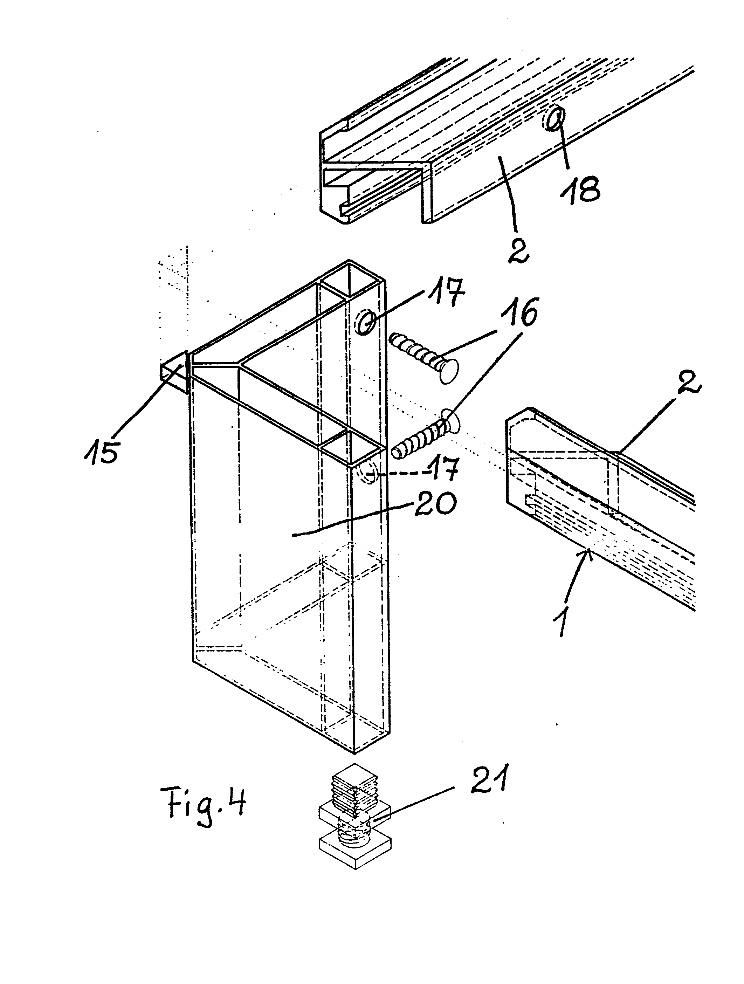

In Fig. 4 ist eine der Fig. 3 entsprechende Darstellung mit der Abänderung gebracht, daß das Winkelstück 10 nicht völlig in die Kammer 6 eingreift, sondern zu einem Stützbein 20 nach unten verlängert ist. Zur Verwendung der Platte als Tisch ist also kein weiteres Teil notwendig, sondern lediglich die Verlängerung des die Verbindung vornehmenden Winkelstücks. In das Stützbein 20 können von unten höhenverstellbare Sockelfüße 21 eingesetzt werden.

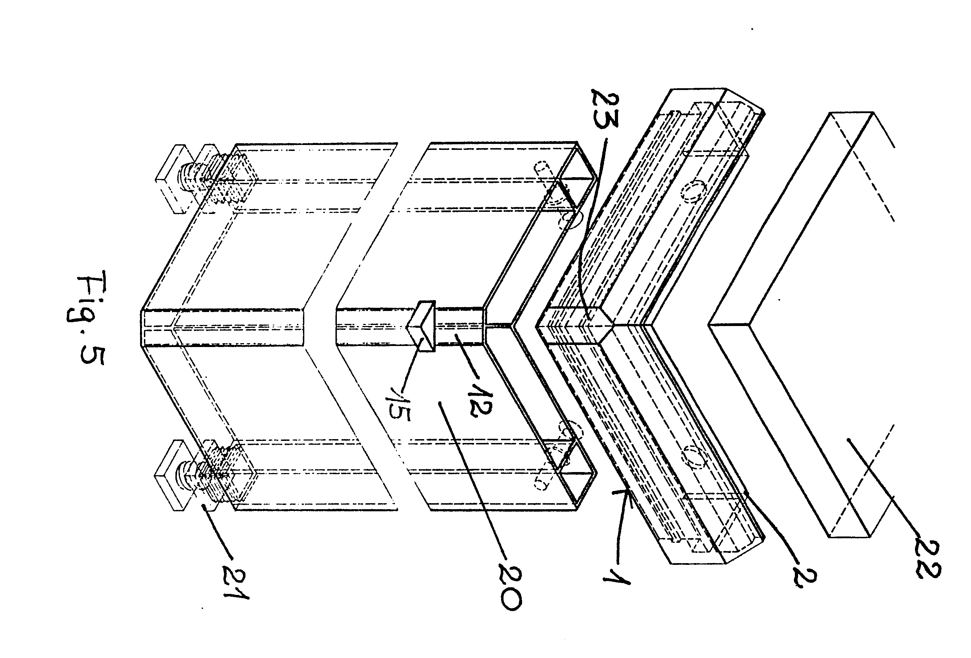

Eine perspektivische Ansicht auf eine Plattenecke mit Stützbein 20 zeigt Fig. 5. Die beiden auf Gehrung geschnittenen Rahmenprofilteile stoßen hierbei an der Ecke zusammen, und die abgeflachte Kante 23 dient der Vermeidung von scharfen Rechtwinkelkanten. Der Einsatz 22 greift in den Rahmen 1 ein und liegt auf dem Rücken 5 des umlaufenden Profils 2 auf. Der aufstehende Flansch 8 sichert den Einsatz gegen Verschiebung. Vorzugsweise schließt die Oberseite des Einsatzes bündig mit dem oberen Rand des Flansches 8 ab.

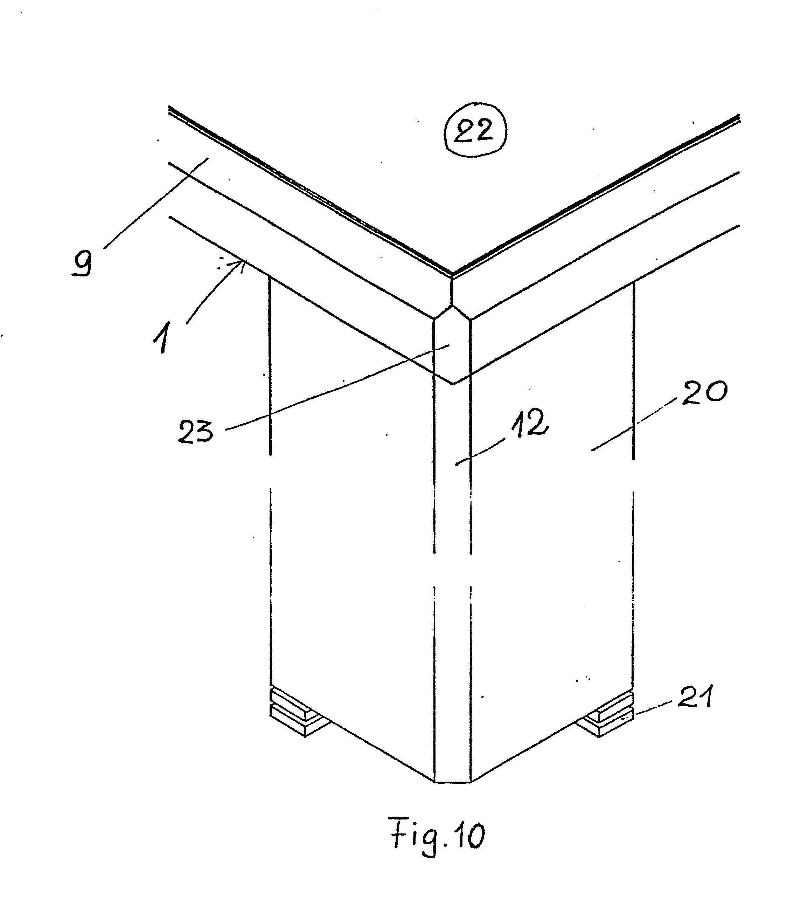

Die in Explosivdarstellung in Fig. 5 gezeigte Ecke ist in Fig. 10 nach Zusammenbau in Ansicht gezeigt.

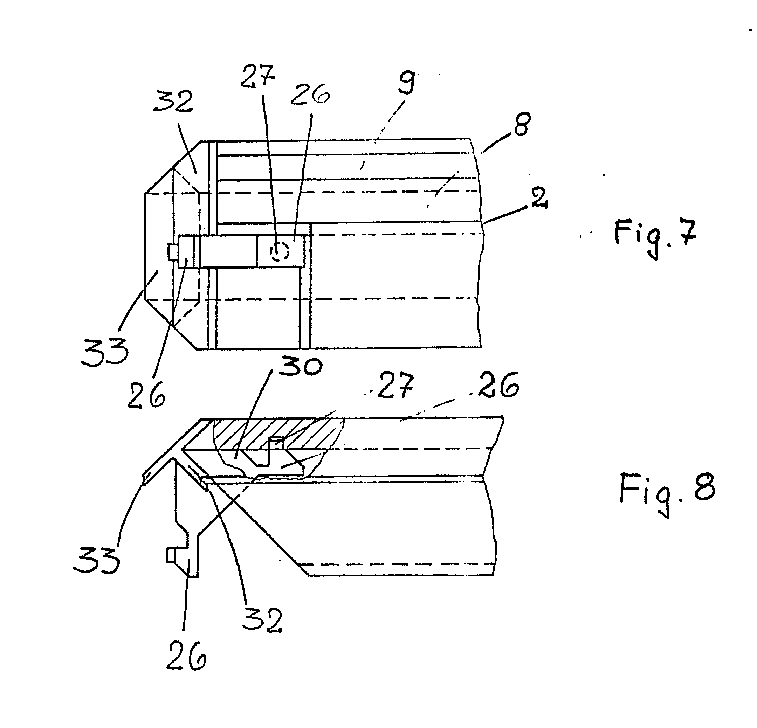

Die Figuren 6a und 7a zeigen eine Vorderansicht und eine Draufsicht auf einen modifizierten Dreieckkeil 25. Dabei sind ausgehend von dem Dreieckkeil 15 die beiden nicht rechtwinkligen Ecken durch Fortsätze 26 verlängert, die in die Nuten 7 der zu verbindenden Rahmenprofilteile passen. Diese Fortsätze erleichtern die Montage und erlauben durch die Knöpfe 27, die in entsprechende Vertiefungen 28 des Nutenbodens 29 der Nuten 7 eingreifen, eine sichere Fixierung der Dreieckkeile an dem Rahmenteil vor Zusammenbau mit dem Winkelstück 10. Die Fortsätze 26 sind über Sollbiegestellen 31 mit dem Kern 30 des Dreieckkeils verbunden. Vor der freien rechtwinkligen Ecke des Kerns 30 befindet sich ein Schirm 33, der über einen Steg 32 mit dem Kern 30 verbunden ist. Dieser Schirm 33 deckt die Fläche 23 (vgl. Fig. 5) ab, und die entsprechend angepaßten Enden der Rahmenprofilteile greifen hinter den Schirm und schlagen an dem Steg an, der in seiner Form dem Rahmenprofil 1 entspricht.

Die Zuordnung des Dreieckkeils 25 zu dem Rahmenprofilteil ist in Seitenansicht und Draufsicht aus der Fig. 7 und 8 zu entnehmen. Zufolge der Ausbildung des Dreieckkeils 25 wird die Montage vereinfacht und auch sicherer, indem der Keil fest an den Rahmenprofilteilen fixiert werden kann, bevor die Verschraubung mit dem als Eckverbinder dienenden Winkelstück 10 erfolgt. Die Schirmplatte vor der abgeschrägten Ecke gewährleistet eine glatte Oberfläche, die
sich an den Rahmen völlig anschmiegt.

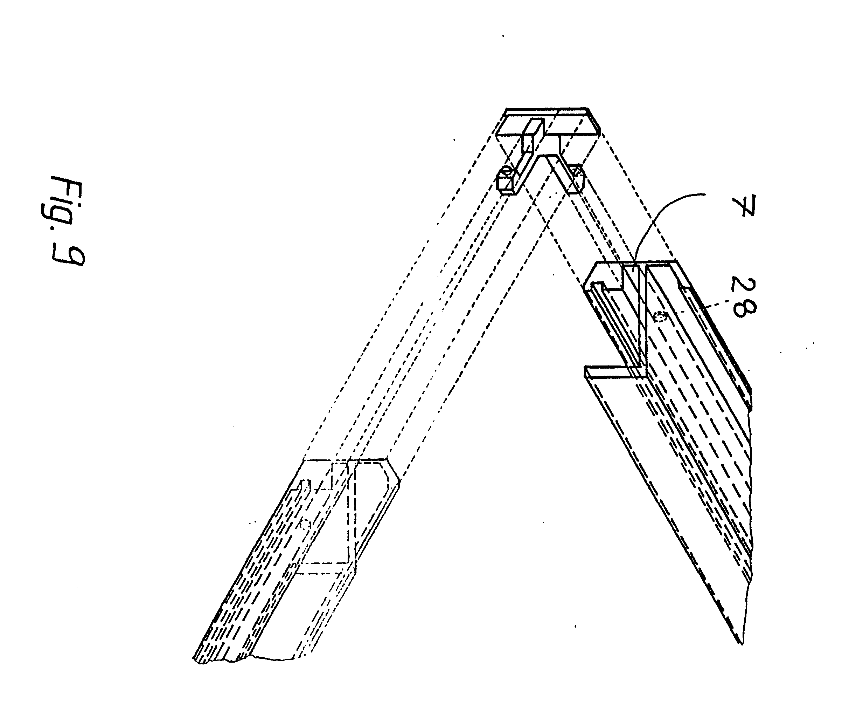

Eine Explosivdarstellung, aus der die Zuordnung des Dreieckkeils 25 zu den Rahmenprofilteilen 1, deren benachbarte
Enden in den Raum zwischen dem Keilkern 30 und dem Schirm
33 greifen, und sich pass an den Steg bzw. die Schirmplatte
anlegen, ist in Fig. 9 gezeigt. Die Rahmenausführung, die
unter Verwendung des Dreieckkeils 25 mit Vorsatzschirm
gefertigt ist, entspricht im Äußeren vollständig der Darstellung, wie sie in Fig. 10 gezeigt ist.

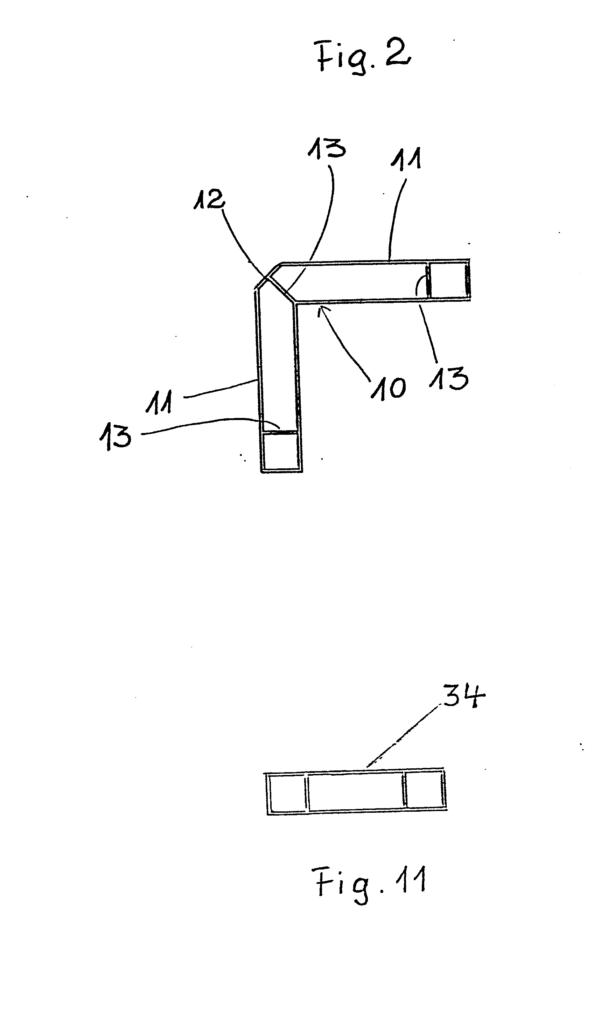

Die Stützbeine für die erfindungsgemäß ausgebildeten Tischrahmen brauchen nicht nur durch Verlängerung der die Verbindung vornehmenden Winkelstücke gebildet zu werden, sondern können auch an anderer Stelle als an den Plattenecken
vorgesehen sein. So ist es möglich, Stützbeine 34 - etwa
wie in Fig. 11 in Draufsicht gezeigt - heranzuziehen, die
an irgendwelchen Stellen der Platte in die Öffnung 6 des
Profils 2 eingreifen und mit diesem verschraubt sind. Die
Stabilität der Tischrahmenverbindung erlaubt auch andere
Anschlußteile in die Kammer 6 einzuschieben und durch
Verschraubung mit dem Rahmenprofil der Platte zu verbinden.
Auch lassen sich Rohre für elektrische Leitungen darin unterbringen. Der erfindungsgemäße Rahmen bzw. die daraus
hergestellte Platte kann außer den bereits beschriebenen
Stützbeinen auch von Schubkasten, Schränken, Regalen, Maschinen, Tischen usw. oder wahlweise von dem einen oder
anderen Teil getragen werden und kann durch ihre Starrheit
und Festigkeit in vielen Bereichen, wie beispielsweise im
Büro oder auf dem Betriebs- und Haushaltssektor, Anwendung
finden.

- Patentansprüche -

0244345

## Patentansprüche

1.) Rahmeneckverbindung für Tische aus mehreren auf Gehrung geschnittenen Rahmenprofilteilen, die über Eckverbinder miteinander verbunden sind, d a d u r c h g e k e n n z e i c h n e t , daß die Eckverbinder als Winkelstücke (10) ausgebildet, deren Spitze abgeflacht ist und wobei zwischen Eckverbinder und der die Ecke bildenden Rahmenprofilteile ein Dreieckkeil (15, 25) eingesetzt und die beiden Schenkel (11) des Eckverbinders mit den Rahmenprofilteilen verschraubt sind.

2.) Eckverbindung nach Anspruch 1, d a d u r c h g e k e n n z e i c h n e t , daß der Eckverbinder (10) zu einem Stützbein (20) verlängert ist.

3.) Eckverbindung nach Anspruch 1 oder 2, d a d u r c h g e k e n n z e i c h n e t , daß der Dreieckkeil (15, 25) an zwei der Ecken Fortsätze (26) aufweist, die in Nuten (7) der Innenwand des äußeren Schenkels (3, 3a) der Rahmenprofilteile eingreifen und mit knopfartigen Vorsprüngen (27) zum Eingriff in Vertiefungen (28) versehen sein können.

4.) Eckverbindung nach Anspruch 3, d a d u r c h g e k e n n z e i c h n e t , daß die freie Ecke des Dreieckkeils (25) eine Schirmplatte (33) trägt, hinter die die auf Gehrung geschnittenen Rahmenprofilteile (1, 1*) greifen.

5.) Eckverbindung nach Anspruch 5,
d a d u r c h   g e k e n n z e i c h n e t ,
daß die Schirmplatte (33) über einen Steg (32) mit dem
Dreieckkeil (25) verbunden ist, an dem die Rahmenprofilteile (1, 1*) anliegen und der in seiner äußeren
Form der Form der Außenwandung der Rahmenprofilteile
(1, 1*) entspricht.

6.) Eckverbindung nach Anspruch 1,
d a d u r c h   g e k e n n z e i c h n e t ,
daß der Dreieckkeil (15, 25) ein rechtwinkeliges
Dreieck bildet.

7.) Eckverbindung nach Anspruch 4 und 6,
d a d u r c h   g e k e n n z e i c h n e t ,
daß die Schirmplatte (33) der rechtwinkeligen Ecke des
Dreieckkeils (25) vorgesetzt ist.

8.) Eckverbindung
nach einem oder mehreren der vorhergehenden Ansprüche,
d a d u r c h   g e k e n n z e i c h n e t ,
daß die Verbindung zwischen Winkelstück (10) und
Rahmenprofil (2, 1a) über nur je eine Schraube (16)
durch die Schenkel (11) des Winkelstücks (10) erfolgt.

9.) Eckverbindung
nach einem oder mehreren der vorhergehenden Ansprüche,
d a d u r c h   g e k e n n z e i c h n e t ,
daß die Rahmenteile (1, 1*) an den auf Gehrung geschnittenen Ecken abgeschrägt sind.

10.) Eckverbindung
   nach einem oder mehreren der vorhergehenden Ansprüche,
   d a d u r c h   g e k e n n z e i c h n e t ,
   daß das Winkelstück (10) aus einem rundum geschlossenen hohlen Strangpreßteil gegebenenfalls mit
   Zwischenwänden (13) besteht.

Fig.1b

Fig.1a

Fig.3

Fig.4

Fig. 5

Fig. 6a

Fig. 6b

Fig. 7

Fig. 8

Fig. 9

Fig.10

Fig. 2

Fig. 11